# Withers & Rogers European Patent Attorneys, Chartered Patent Agents, Trade Mark Agents

**4 Dyer's Buildings, Holborn, London EC1N 2JT**

B E Arthur, D.L.C., C.P.A.
P C Turner, Ph.D., M.A., C.P.A.
D T Frost, C.P.A.
D G Bannerman, B.Sc. (Chem.), C.P.A.
D. Hartley, B.Sc. (Mech. Eng.), C.P.A.
N M Wilson, C.P.A.
W M Blatchford, B.Sc. (Elec. Eng)., C.P.A
———————
M Adkins, C.P.A.

**Accounts:** Mrs M Sturgess
**Renewals:** D E Ayres (Manager)
      Mrs C M Downey

**Assisted by:**
I S Harrison, C.Chem., M.R.S.C., C.P.A
Miss S E Pickin, B.Sc. (Phys.), C.P.A.
M A Armitage, B.Sc., M.I.T.M.A.
Mrs H Toomer, M.A.
M H Elliott, B.Sc.
J P Dean, B.Sc.

**Consultants:**
J M Wilson, C.P.A.
W Blatchford, C.P.A.
D Vincent, B.Sc. (Chem.), C.P.A.
P Michaels, B.Sc. (Phys.), C.P.A.

Tel: (01) 405 7197 (4 lines)
   & (01) 405 0480
Telex: 22444
Cables: IMPROVABLY LONDON EC1
Fax: CCITT – Group 3 + 2
   (01) 242 0310 and
   (01) 831 7396

Our ref: **DTF/JB**

Your ref:

8 August, 1988


European Patent Office,
Branch at The Hague,
Netherlands.


Dear Sirs,

Re: Application No. 88305055.1
    Hubert T. Kleysen.


We refer to your letter of 21st July, 1988 and are obliged to you for pointing out the typographical error in the numbering of the claims. The first of the two claims 8 should, of course, have been numbered "7" and we request appropriate amendment as soon as this is possible.


Yours faithfully,
WITHERS & ROGERS

D.T. Frost

Also at 9 The Parade. Leamington Spa. Warwickshire CV32 4DG Tel: (0926) 36111, Telex 312382. Telefax CCITT Groups 3 + 2 (0926) 35519
46 Tavistock Place. Plymouth PL4 8AX Tel: (0752) 220381/2. Telex: 45791. Telefax CCITT Groups 3 + 2 (0752) 267645

Europäisches Patentamt

European Patent Office

Office européen des brevets

(11) Publication number: **0 330 776**
**A1**

## EUROPEAN PATENT APPLICATION

(21) Application number: 88305055.1

(51) Int. Cl.⁴: **B60P 1/16** , **B60G 17/00**

(22) Date of filing: 03.06.88

A request to renumber the claims has been filed pursuant to Rule 88 EPC. A decision on the request will be taken during the proceedings before the Examining Division (Guidelines for Examination in the EPO, A-V, 2.2).

(30) Priority: **01.03.88 CA 560174**

(43) Date of publication of application:
**06.09.89 Bulletin 89/36**

(84) Designated Contracting States:
**AT BE CH DE ES FR GB GR IT LI LU NL SE**

(71) Applicant: **Kleysen, Hubert T.**
**39 Shoecrest Drive**
**Winnipeg Manitoba R3P 0Y1(CA)**

(72) Inventor: **Kleysen, Hubert T.**
**39 Shoecrest Drive**
**Winnipeg Manitoba R3P 0Y1(CA)**

(74) Representative: **Frost, Dennis Thomas et al**
**WITHERS & ROGERS 4 Dyer's Buildings**
**Holborn**
**London, EC1N 2JT(GB)**

(54) **Drop deck trailer van construction.**

(57) A drop deck van trailer has a trailer body (14) with wheel wells (28) projecting into the cargo space. To facilitate loading and unloading, the body is arranged to be raised or lowered on the wheel set (18), bringing the floor of the trailer body (32) up flush with a floor section (30) extending across the top of the wheel wells. It is also possible to arrange the suspension (90, 98) to be adjustable so that the raised trailer body can further be adjusted in height to accommodate loading docks of various heights.

FIG. 2

EP 0 330 776 A1

The present invention relates to van trailers and more particularly to drop deck van trailers.

A drop deck van trailer comprises a trailer body with a floor, hitch means at the front end of the trailer body, a wheel set spaced inwardly from the hitch means, body supporting means supporting the body on the wheel set land wheel wells projecting above the floor of the trailer body to house the wheel set.

A trailer of this type has a greater capacity than a standard trailer due to the relatively low floor level. However, this low floor level requires that wheel wells be provided within the trailer, which causes difficulty when loading and unloading heavy objects and containers.

As an example, it is impossible to use mechanical loading and unloading equipment such as fork lifts because of the wheel wells.

The present invention is intended to ameliorate this disadvantage of the conventional drop deck trailer.

The present invention provides a drop deck van trailer of the above described type characterized in that the body supporting means include height adjustment means for raising and lowering the trailer body on the wheel set between a raised position and a lowered position and the wheel wells are mounted on the wheel set and have a floor section that lies flush with the floor of the trailer body in the raised position of the body and that is positioned above the level of the floor of the trailer body in the lowered position of the body.

The raised position of the trailer body is the loading and unloading position. The floor section across the top of the wheel wells is, in this position, flush with the rest of the floor so that there is no interference with the passage of goods and equipment along the body.

The invention also provides a trailer of the above described type further characterized by a sub frame and suspension means supporting the subframe on the wheel set, the suspension means being adjustable to raise and lower the subframe relative to the axle.

With this embodiment, the trailer body may be raised to provide a level floor and then the trailer raised on the wheels as necessary by means of the adjustable suspension to bring the floor to the level of a loading dock. Embodiments of the invention that include this arrangement preferably use an air suspension with oversized air bags so that inflation of the air suspension bags will raise the body.

It is preferred that a locking mechanism be provided for locking the body in both the raised and lowered positions. Where an adjustable suspension is used, an additional locking arrangement is used for locking this adjustment as well.

In the accompanying drawings, which illustrate exemplary embodiments of the present invention:

Figure 1 is a side elevation, partially broken away, of a truck and trailer combination embodying the present invention;

Figure 2 is a view like of Figure 1 showing the trailer body in the raised position;

Figure 3 is a detailed sectional view along line III-III of Figure 7, showing the trailer body in the lowered position;

Figure 4 is a view like Figure 3 showing the trailer body in the raised position;

Figure 5 is a view along line V-V of Figure 7, showing the trailer body in the lowered position;

Figure 6 is a view like Figure 5 showing the trailer body in a raised position;

Figure 7 is a plan view of the wheel support section of the trailer body, partially broken away;

Figure 8 is an elevational view like Figure 3 of another embodiment of the invention;

Figure 9 is a view like Figure 8 with the trailer body in the raised position;

Figure 10 is a view like Figures 8 and 9 showing the trailer body raised and the suspension elevated; and

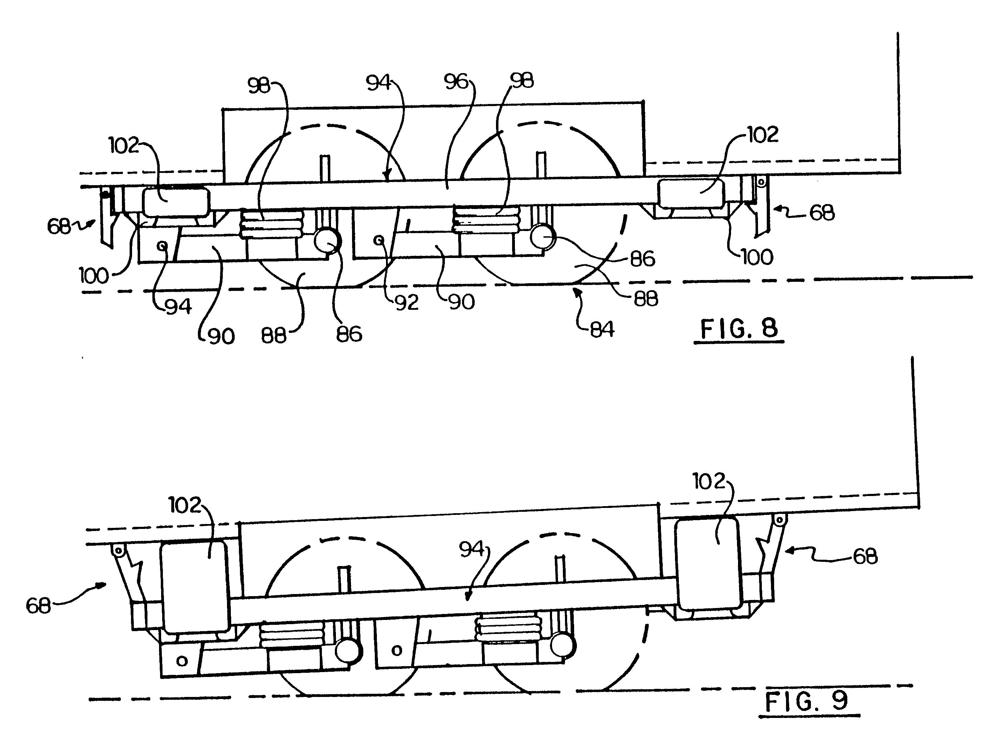

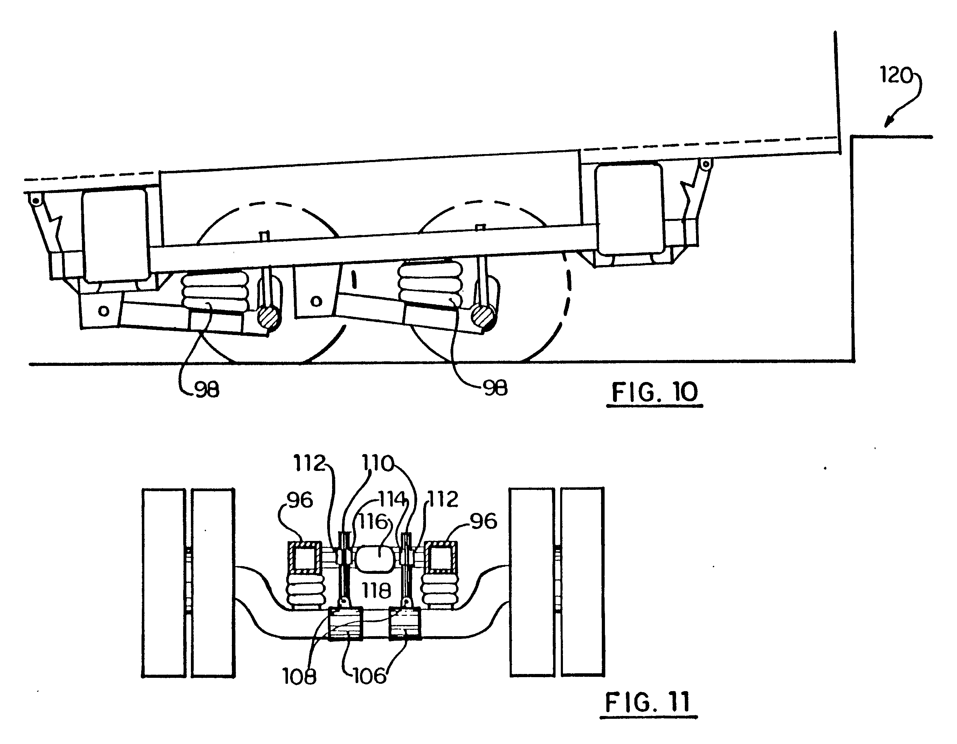

Figure 10 is an end elevation of the suspension of Figures 8 through 10, partially in section.

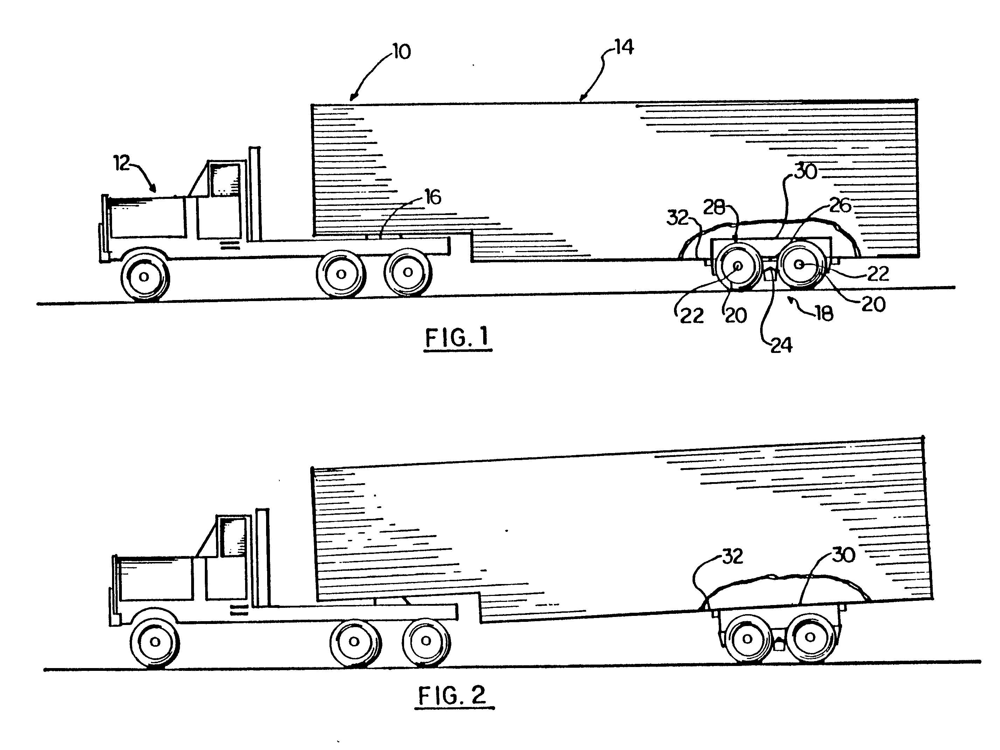

Referring to the accompanying drawings, and especially to Figures 1 and 2, there is illustrated a tractor trailer combination 10 that includes a tractor 12 and a trailer 14 linked by a conventional fifth wheel hitch 16. Spaced to the rear of the trailer is a wheel set 18 that includes eight wheels 20 mounted on tandem axles 22. The axles are mounted by leaf springs 24 on a subframe 26.

As illustrated in Figure 1, the drop deck van trailer 14 has wheel wells 28 projecting upwardly into the cargo space of the trailer. Extending across the top of the wheel wells is a floor section 30 that is thus located above the surrounding trailer floor 32.

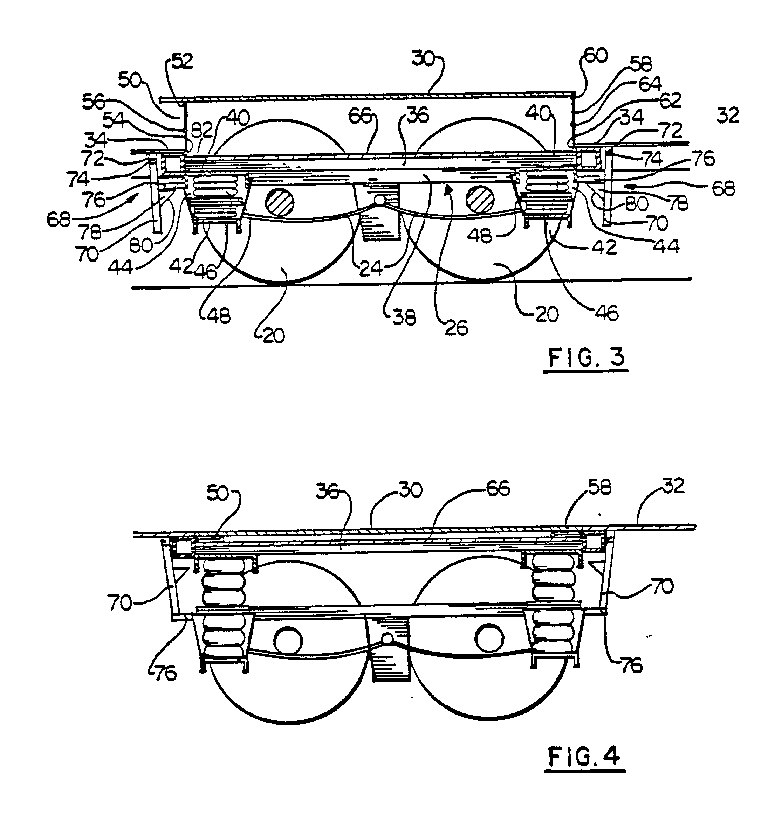

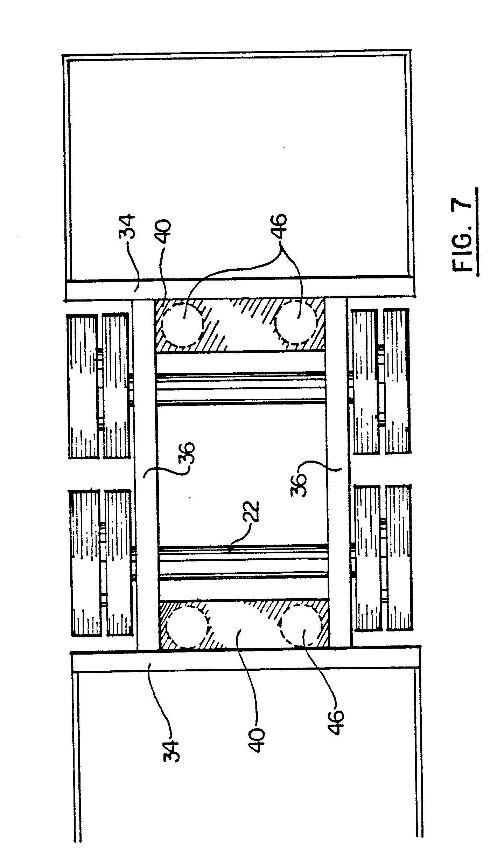

Figure 2 illustrates the trailer body in a raised position where the floor section 30 is flush with the remainder of the trailer floor 32 to provide for convenient loading and unloading. The mechanism for achieving this movement of the body on the wheel set is illustrated in more detail in Figures 3 through 7.

Immediately to the front and back of the wheel set 18, the trailer body has transverse frame members 34. These are joined by two longitudinal frame members 36 that are inset from the sides of the body to accommodate the wheels 20. The subframe of the wheel set 18 has two longitudinal frame members 38 that, in the lowered position of the body, extend along the undersides of the frame members 36.

The frame members 36 carry on their undersides two transverse, downwardly opening shallow channels 40. These are located immediately above two channels 42 that extend between the longitudinal frame members 38 of the subframe and are joined to the members 38 by depending spring supports 44. The channels 40 and 42 serve as top and bottom seats for a plurality of air bags 46. The bags are arranged in tandem pairs with a bag spacer 48 between each pair of bags.

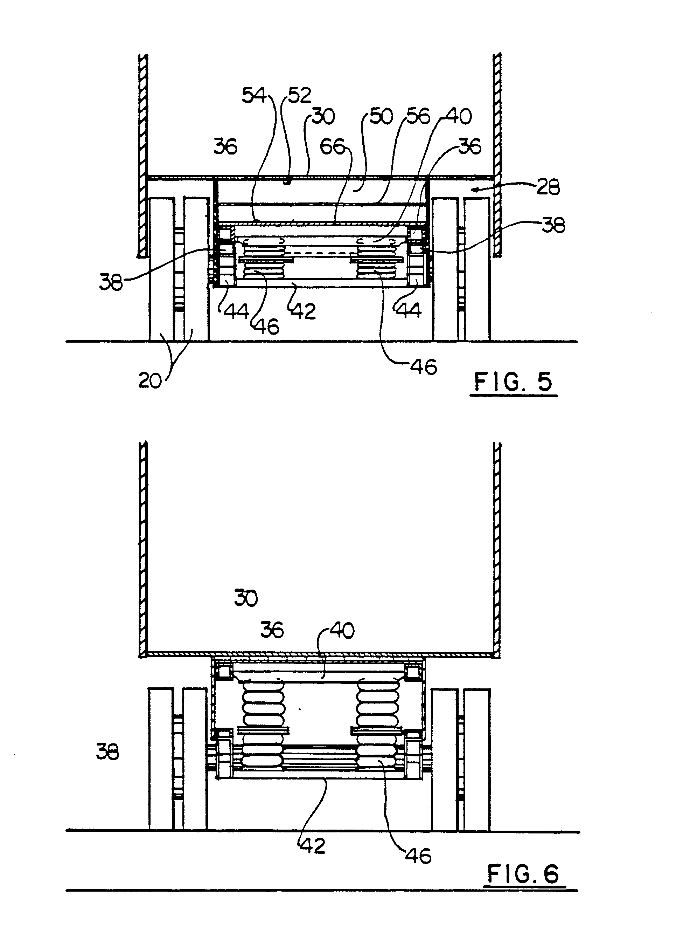

In Figures 3 and 5, the trailer body is shown in a lowered position, the condition in which it is transported. To close the spaces between the housings that constitute the wheel wells proper, the floor section 30 and the trailer floor 32, two collapsible panels are employed. A front wall 50 has an upper transverse hinge 52 connecting it to the underside of the floor section 30 and a similar transverse hinge 54 connecting its lower edge to the front transverse frame number 34. Midway between the hinges 52 and 54 is a third transverse hinge 56. A back wall 58 is likewise provided with top and bottom hinges 60 and 62 respectively and a centre hinge 64. The arrangement is such that as the trailer rises, bringing the floor 32 up to the level of the floor section 30, the walls 50 and 58 will collapse inwards to the position illustrated in Figure 4. Immediately beneath the collapsed walls 50 and 58 and on the top of frame members 36 is a plate 66 that closes the space below the floor section 30.

Locks 68, illustrated in Figures 3 and 4, are used to lock the van body in its raised or lowered position. Each lock consists of a lock bar 70 that is connected to a lug 72 on the body by a pin 74. In the raised position of the body, the lock bar extends between the pin 74 and a lock seat 76 that forms part of the subframe 26, as illustrated in Figure 4. This prevents the van body from lowering due to deflation of the air bags. Each lock bar 70 is also equipped with a latch 78 with a tapered lower face 80 and an upper face 82 that engages under the lock seat 76 when the van body is in a lowered position as illustrated in Figure 3. The lock bars 70 are connected by a linkage that will, when actuated, deflect the bars outwardly to release the lock seat 76 to permit the van body to raise or lower with the inflation or deflation of the air bags.

An alternative embodiment of the invention is illustrated in Figures 8 through 11. In that embodiment, the wheel set 84 consists of tandem drop axles 86 carrying four wheels 88 each. Each axle is carried on suspension arms 90 that project forwardly from the axle and are mounted by pivots 92 on the longitudinally extending beams 96 of subframe 94. Each of the suspension arms 90 is located beneath a beam 96, with an air bag 98 positioned between the two to provide an air suspension for the vehicle. Two channels 100 extend transversely of the subframe, beneath the beams 96 and carry air bags 102 that also engage the underside of the trailer body. As illustrated in Figures 8, 9 and 10, the wheel set is equipped with locks 68 as described above in connection with Figures 3 and 4.

The trailer body is shown in its lowered condition in Figure 8. The locks 68 are engaging the subframe 94 and locking it to the van body. Figure 9 illustrates the trailer body in the raised position, with the air bags 102 inflated to raise the body. The locks 68 are now engaged between the body and the subframe 94 to maintain their separation.

In Figure 10, the trailer body is shown in its raised position and, in addition, the air bags 98 of the suspension have been inflated to raise the subframe and trailer body to the level of the loading dock generally illustrated at 120.

An auxillary locking system used to lock the suspension in its elevated position is illustrated most particularly in Figure 11.

Two sleeves 106 are carried on each axle 86. Each is equipped with lugs 108 that are pivotally connected to vertically oriented pipes 110. An outer saddle 112 mounted on a subframe beam 96 engages the outer side of each pipe 110, while an inner saddle 114 engages the inner side of the pipe opposite the outer saddle 112. The inner saddles 114 are associated with a spring brake 116 that is mounted on a support 118 extending between the beams 96. The spring brake is a conventional spring set, pneumatically released brake unit so that the suspension will be locked in its position in the absence of a pressurized air supply to the unit.

In use of either embodiment of the invention, the trailer body is elevated for loading or unloading purposes, thus providing a flat, unbroken floor surface that makes loading and unloading the van much more convenient for either a crew or equipment that they may wish to use. This convenience is augmented with the air suspension version of the invention where the height of the body can further be adjusted to accomodate variations in loading dock heights. For transport purposes, the body is lowered, providing the characteristics of a conventional drop deck van trailer.

While two embodiments of the invention have been described in the foregoing, it is to be understood that other embodiments are possible within the scope of the present invention. The invention is to be considered limited solely by the scope of the appended claims.

## Claims

1. A drop deck van trailer comprising a trailer body with a floor, hitch means at the front end of the trailer body, a wheel set spaced rearwardly from the hitch means, body supporting means supporting the body on the wheel set and wheel wells projecting above the floor of the trailer body to house the wheel set, characterized in that the body supporting means (40, 42, 44, 46; 100, 102) include height adjustment means (46; 102) for raising and lowering the trailer body (14) on the wheel set (18; 84) between a raised position and a lowered position and the wheel wells are mounted on the wheel set and have a floor section (30) that lies flush with the floor (32) of the trailer body in the raised position of the body and that is positioned above the level of the floor of the trailer body in the lowered position of the body.

2. A trailer according to Claim 1 characterized in that the height adjustment means comprise extensible lifting means (46; 102) between the wheel set and the trailer body.

3. A trailer according to Claim 2 characterized in that the extensible lifting means comprise a plurality of inflatable air bags (46; 102).

4. A trailer according to any one of Claims 1, 2 or 3 characterized in that the wheel set (18; 84) comprises at least one axle (22; 86) carrying plural wheels, a subframe (38; 94) and suspension means (24; 90; 98) supporting the subframe on the axles.

5. A trailer according to Claim 4 characterized in that the suspension means comprise air bags (98).

6. A trailer according to any preceeding Claim characterized by lock means (68) for locking the trailer body in the raised and lowered positions.

8. A trailer according to Claim 6 characterized in that the lock means (68) include lock bars (70) engageable with the subframe and the trailer body in the raised and lowered positions of the body.

8. A trailer according to anyone of Claims 4 to 7 characterized in that the suspension means (98) are adjustable to raise and lower the subframe relative to the axle.

9. A trailer according to Claim 8 characterized in that the suspension means includes arms (90) pivotally connected to the subframe (94) and carrying the axle (86), suspension air bags (98) being engaged between the arms and the subframe.

10. A trailer according to Claims 8 or 9 character ized by suspension lock means (106, 108, 110, 112, 114, 116) for locking the subframe to the axle.

FIG. 1

FIG. 2

EP 0 330 776 A1

FIG. 3

FIG. 4

FIG. 5

FIG. 6

FIG. 7

FIG. 8

FIG. 9

FIG. 10

FIG. 11

EP 0 330 776 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A- 957 939 (PITT)<br>* figures 1-3 * | 1 | B 60 P 1/16<br>B 60 G 17/00 |
| A | | 2,4 | |
| Y | GB-A-2 168 323 (TORQUE LTD.)<br>* figures 3-5 * | 1 | |
| A | | 2,3,5 | |
| A | DE-C- 822 476 (BRUNS)<br>* page 1, lines 13-18; page 2, lines 22-26; figures 1,2 * | 1,2 | |
| A | DE-B-1 226 436 (KAESSBOHRER)<br>* column 1, lines 31-38 * | 1 | |
| A | DE-C-1 040 389 (KAESSBOHRER) | | |

| | |
|---|---|
| | TECHNICAL FIELDS SEARCHED (Int. Cl.4)<br><br>B 60 G 17/00<br>B 60 P 1/00 |

The present search report has been drawn up for all claims

| Place of search | Date of completion of the search | Examiner |
|---|---|---|
| BERLIN | 19-05-1989 | LUDWIG H J |